# EUROPEAN PATENT APPLICATION

(11) **EP 4 546 209 A1**
(43) Date of publication of application: **30.04.2025**
(21) Application number: 23826207.5
(22) Date of filing: 13.06.2023
(51) Int. Cl.: G06F 40/35, G06F 16/332

(54) **SEMANTIC UNDERSTANDING METHOD AND APPARATUS, AND MEDIUM AND DEVICE**

(30) Priority: 23.06.2022 CN 202210717359
(71) Applicant: Shenzhen TCL New Technology Co., Ltd., Shenzhen, Guangdong 518052 (CN)
(72) Inventor: RONG, Xi, Shenzhen, Guangdong 518052 (CN); DU, Zhimin, Shenzhen, Guangdong 518052 (CN); FAN, Weibin, Shenzhen, Guangdong 518052 (CN)
(74) Representative: Murgitroyd & Company
(86) International application number: PCT/CN2023/099842
(87) International publication number: WO 2023/246558

(57) **Abstract**

Provided in the embodiments of the present application are a semantic understanding method and apparatus, and a medium and a device. The method comprises: calculating a first matching degree between an event to be processed and a preset event template; performing statement expansion on the event to be processed to obtain a similar event; calculating a second matching degree between the similar event and the preset event template; and obtaining a first result and a second result according to the first matching degree and the second matching degree, and using the preset event template for the greater one of the first result and the second result, so as to perform semantic understanding. By means of the present application, the recognition capability of a dialogue system can be improved.

## Description

This application claims priority to Chinese Patent Applications No. 202210717359.5, filed on June 23, 2022 and entitled "Semantic understanding method and device, medium and equipment". The entire disclosures of the above application are incorporated herein by reference.

### TECHNICAL FIELD

The present application relates to a semantic understanding method, an apparatus, a medium, and a device.

### BACKGROUND TECHNOLOGY

With development of artificial intelligence technologies, intelligent voice interaction is considered the most natural way of interaction because it is most in line with human communication habits. Users can input requests through voice. Devices equipped with a voice recognition function first convert a voice input signal of the user into text, then analyze user intentions through a series of subsequent natural language processing processes, and finally respond to the corresponding function based on the understood user intentions.

How to make a machine correctly understand the user intentions has become a major difficulty in voice interaction systems. Since users have their own expression habits, the same request may be expressed in several ways. However, due to the limited corpus, the voice interaction system cannot accurately recognize the user intentions, resulting in misunderstanding or not understanding the user intentions, resulting in a poor interaction experience.

### SUMMARY OF INVENTION

Embodiments of the present application provide a semantic understanding method, an apparatus, a medium, and a device, which can quickly generate a large number of similar statements for speech generalization when a current corpus is not sufficient to recognize user intentions, thereby improving an ability of a dialogue system to recognize the user intentions and thus improving a voice interaction experience.

On the one hand, an embodiment of the present application provides a semantic understanding method, including:
preprocessing an acquired event to be processed, and matching and calculating the preprocessed event to be processed with a preset event template to obtain a first matching degree;
inputting the event to be processed into a pre-trained semantic enhancement model for statement expansion to obtain a similar event of the event to be processed;
matching and calculating the similar event or the event to be processed with the preset event template to obtain a second matching degree;
calculating the first matching degree and the second matching degree according to a preset rule to obtain a first result and a second result respectively, and taking the preset event template corresponding to a larger one of the first result and the second result as a target event template to semantically understand the event to be processed.

In the semantic understanding method described in the embodiment of the present application, the calculating the first matching degree and the second matching degree according to the preset rule to obtain the first result and the second result respectively includes:
performing weighted calculations on the first matching degree and the second matching degree to obtain the first result and the second result according to different weight values pre-assigned to the similar event and the event to be processed.

In the semantic understanding method described in the embodiment of the present application, after taking the preset event template corresponding to the larger one of the first result and the second result as the target event template to semantically understand the event to be processed, the method further includes:
storing the similar event corresponding to the larger one of the first result and the second result in a sample database of the semantic enhancement model as a newly added training sample.

In the semantic understanding method described in the embodiment of the present application, after taking the preset event template corresponding to the larger one of the first result and the second result as the target event template to semantically understand the event to be processed, the method further includes:
converting the similar event obtained by an operation of the statement expansion into a newly added preset event template based on a Lexparser syntax analysis tool, and storing the newly added preset event template in a database for storing the preset event template, so as to update the database.

In the semantic understanding method described in the embodiment of the present application, the semantic enhancement model includes a statement generator and a statement discriminator. The statement generator is configured to generate the similar event based on a training sample, and the statement discriminator is configured to determine an authenticity of a tag corresponding to the similar event.

In the semantic understanding method described in the embodiment of the present application, the preset event template includes at least two word dictionaries and word slots corresponding to the corresponding word dictionaries, and each of the word dictionaries has a corresponding word tag in the preset event template, and the word tag is configured to indicate a word attribute of the word dictionary.

In the semantic understanding method described in the embodiment of the present application, the method further includes:
filling at least two keywords contained in the event to be processed into the corresponding word slots of the target event template to obtain a target template file;
inputting the target template file into an answer engine to perform an event retrieval operation, and outputting a target answer corresponding to the event to be processed.

In the semantic understanding method described in the embodiment of the present application, after obtaining the at least two keywords contained in the event to be processed, the method further includes:
recording a first arrangement order of the at least two keywords in the event to be processed.

In the semantic understanding method described in the embodiment of the present application, the at least two word dictionaries in the preset event template are sorted according to a preset second arrangement order; and the matching and calculating the preprocessed event to be processed with the preset event template to obtain the first matching degree includes:
acquiring a first text feature vector of the event to be processed and a second text feature vector of the preset event template;
calculating a text feature similarity value between the event to be processed and the preset event template according to the first text feature vector and the second text feature vector;
acquiring a first temporal feature vector of the event to be processed according to the first arrangement order, and acquiring a second temporal feature vector of the preset event template according to the second arrangement order;
calculating a temporal feature similarity value between the event to be processed and the preset event template according to the first temporal feature vector and the second temporal feature vector;
adding the text feature similarity value and the temporal feature similarity value to obtain the first matching degree.

In the semantic understanding method described in the embodiment of the present application, after outputting the target answer corresponding to the event to be processed, the method further includes:
feeding back the target answer to a user in a preset display form.

Correspondingly, on the other hand, an embodiment of the present application further provides a semantic understanding apparatus, including:
an event acquisition module configured to preprocess an acquired event to be processed, and match and calculate the preprocessed event to be processed with a preset event template to obtain a first matching degree;
a semantic enhancement module configured to input the event to be processed into a pre-trained semantic enhancement model for statement expansion to obtain a similar event of the event to be processed;
a matching and calculating module configured to match and calculate the similar event or the event to be processed with the preset event template to obtain a second matching degree;
a target selection module configured to calculate the first matching degree and the second matching degree according to a preset rule to obtain a first result and a second result respectively, and take the preset event template corresponding to a larger one of the first result and the second result as a target event template to semantically understand the event to be processed.

Correspondingly, on the other hand, an embodiment of the present application further provides a storage medium, the storage medium stores a plurality of instructions, the instructions are suitable for being loaded by a processor to execute the semantic understanding method as described above.

Correspondingly, on the other hand, an embodiment of the present application further provides a terminal device, including a processor and a memory, where the memory stores a plurality of instructions, and the processor loads the instructions to execute the semantic understanding method as described above.

The embodiments of the present application provide the semantic understanding method, the apparatus, the medium, and the device. **In** the method, the acquired event to be processed is preprocessed, and the preprocessed event to be processed is matched and calculated with the preset event template to obtain the first matching degree; the event to be processed is input into the pre-trained semantic enhancement model for statement expansion to obtain the similar event of the event to be processed; the similar event or the event to be processed is matched and calculated with the preset event template to obtain the second matching degree; the first matching degree and the second matching degree are calculated according to the preset rule to obtain the first result and the second result respectively, and the preset event template corresponding to the larger one of the first result and the second result is taken as the target event template to semantically understand the event to be processed. The embodiments of the present application can quickly generate a large number of similar statements for generalization of speech when a current corpus is not sufficient to recognize user intentions, thereby improving an ability of a dialogue system to recognize user intentions and further improving a voice interaction experience.

### BRIEF DESCRIPTION OF THE DRAWINGS

To describe the technical solutions in the embodiments of the present application clearly, the following briefly describes the accompanying drawings required for illustrating the embodiments of the present application. Apparently, the accompanying drawings described in the following description illustrate only some embodiments of the present application, and a person skilled in the art may derive other accompanying drawings based on these accompanying drawings without creative efforts.
FIG. 1 is a flowchart of a semantic understanding method provided in an embodiment of the present application.
FIG. 2 is another flowchart of a semantic understanding method provided in an embodiment of the present application.
FIG. 3 is a schematic diagram of a structure of a semantic understanding apparatus provided in an embodiment of the present application.
FIG. 4 is another schematic diagram of a structure of a semantic understanding apparatus provided in an embodiment of the present application.
FIG. 5 is a schematic diagram of a structure of a terminal device provided in an embodiment of the present application.

### DETAILED DESCRIPTION OF THE PREFERRED EMBODIMENTS

The following describes the technical solutions in the embodiments of the present application clearly and completely with reference to the accompanying drawings in the embodiments of the present application. Apparently, the described embodiments are merely a part rather than all of the embodiments of the present application. All other embodiments obtained by a person skilled in the art based on the embodiments in the present application without creative efforts shall fall within the protection scope of the present application.

An embodiment of the present application provides a semantic understanding method. The semantic understanding method can be applied to a terminal device. The terminal device can be a device such as a smart phone or a computer.

It should be explained that since users have their own expression habits, the same request may be expressed in several ways. However, due to the limited corpus, a voice interaction system cannot accurately recognize user intentions, resulting in misunderstanding or not understanding the user intentions, resulting in a poor interaction experience.

In order to solve the above technical problems, the embodiments of the present application provide a semantic understanding method. Using the semantic understanding method provided by the embodiments of the present application, when a current corpus is not sufficient to recognize user intentions, a large number of similar statements can be quickly generated for speech generalization, thereby improving an ability of a dialogue system to recognize the user intentions and thus improving a voice interaction experience.

### Embodiment 1:

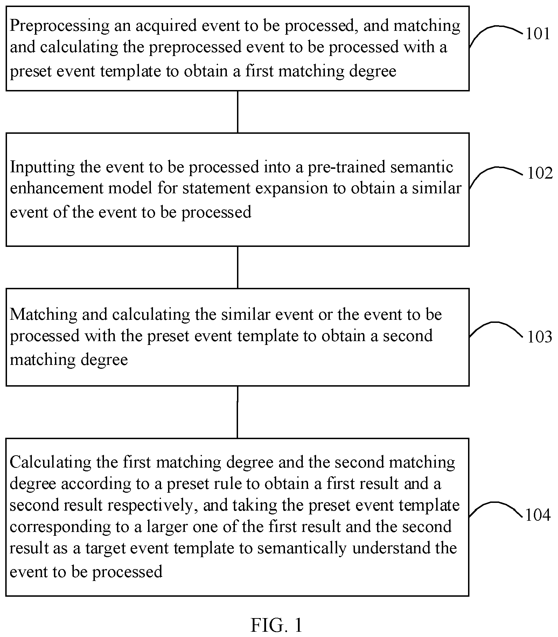

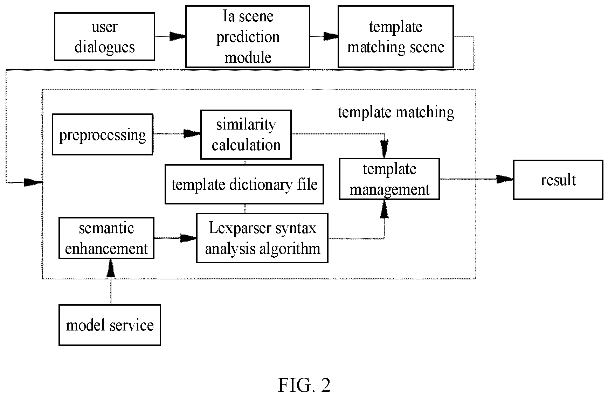

Please refer to FIG. 1 to FIG. 2. FIG. 1 is a flowchart of a semantic understanding method provided in an embodiment of the present application. FIG. 2 is another flowchart of a semantic understanding method provided in an embodiment of the present application. The semantic understanding method is applied to a terminal device, and the method may include the following steps:
Step 101, preprocessing an acquired event to be processed, and matching and calculating the preprocessed event to be processed with a preset event template to obtain a first matching degree.

In this embodiment, an user can input a piece of voice data into a voice input device, or input a piece of text data into a text input device (such as a physical keyboard or a virtual keyboard) to trigger the event to be processed. It is understandable that this solution can also be implemented by connecting a voice input device, such as an intelligent voice assistant, to an intelligent device, so as to control the intelligent device (such as an air conditioner) to turn on or off through voice commands or respond to specific commands.

It should be explained that the above-mentioned event to be processed specifically refers to a piece of voice data or a piece of text data. In practical applications, the event to be processed usually inevitably contains interference words that affect semantic understanding, such as "hello", "Excuse me", etc. In order to avoid the influence of interference words on semantic understanding, in this embodiment, a series of preprocessing operations are performed on the event to be processed, such as word segmentation, part-of-speech (POS) tagging, and stop word removal, which are not limited here.

After obtaining the preprocessed event to be processed, the preprocessed event to be processed is matched and calculated with the preset event template pre-stored in a database to obtain the first matching degree. Since the preset event template determines whether there is a target event template matching the event to be processed in the database according to the first matching degree, a user intention of the event to be processed is determined according to the matched target event template. In some embodiments, the calculation method of the first matching degree can be obtained by calculating a similarity value between the event to be processed and the preset event template. It should be understood that the algorithm for the similarity value belongs to a mature technology in the art and does not belong to the improved invention point of this solution, so it is not repeated here.

It should be explained that the preset event templates are multiple template files pre-stored in the database, which are configured to recognize the user intention reflected by the event to be processed. The preset event template contains at least two word dictionaries and word slots corresponding to each word dictionary, and each word dictionary has a corresponding word tag in the preset event template. The word tag is configured to indicate a word attribute of the word dictionary (such as location, time, intention, etc.).

Exemplarily, a word dictionary A is displayed as a word tag a in the preset word dictionary, a can be "location", "time" and "intention", etc., and the word dictionary A is a word set as the word tag a in the preset time template, which includes geographical location words such as "Shenzhen" and "Zhuhai".

By setting multiple preset event templates containing word dictionaries and word attributes, the word dictionaries and word attributes in each preset event template are arranged according to specific rules, and each preset event template is unique. When the event to be processed is "Today's Shenzhen weather", the text data is first split into three keywords: "Today", "Shenzhen", and "Weather", and then the three split keywords are matched with the word dictionary in the preset time template in the database correspondingly, and the target event template with a similarity value exceeding a preset threshold is selected. Each word dictionary in the target event template has its corresponding word tag. Assume that the matched target word template just contains the word dictionary of the three keywords "Today", "Shenzhen", and "Weather", at this time, the word tags corresponding to the matched word dictionary are "time", "location", and "intention", indicating that the user intention corresponding to the event to be processed is to ask about the weather in Shenzhen today. In addition, the user intention determines multiple dimensions at the same time. According to the user intention obtained from the event to be processed, a target answer with the highest matching degree can be found in a targeted manner. Compared with the existing technology that collects a large amount of data to build a corpus and then uses supervised machine learning methods to train a deep learning model to analyze user intention, this solution not only focuses on the overlap of text features, but also pays attention to the word attributes of words, which can better analyze the user intention.

Step 102, inputting the event to be processed into a pre-trained semantic enhancement model for statement expansion to obtain a similar event of the event to be processed.

In this embodiment, since the preset event template in the database is artificially set, it is always impossible to include all possibilities. As a result, when the event to be processed input by the user cannot be recognized to the target event template that matches it, a question and answer request (i.e., the event to be processed) proposed by the user will become an invalid request, affecting the user experience. Therefore, in order to solve this problem, this solution obtains similar events based on the expansion of the event to be processed by inputting the event to be processed into the pre-trained semantic enhancement model for statement expansion. For example, if the event to be processed is represented by a paragraph of text "brightness lowered", several similar events can be generated after the semantic expansion operation, such as "screen brightness lowered a little", "lower screen brightness", etc., which can be recognized by the system and matched to the target word template. Thus, this makes up for the limited number of original preset event templates in the database, thereby improving the system's recognition accuracy of the user intention.

It should be noted that the semantic enhancement model can be trained based on other Chinese pre-training models such as BERT or SIMBERT. The semantic enhancement model specifically includes a statement generator and a statement discriminator. The statement generator is configured to generate the similar event based on the training sample, and the statement discriminator is configured to determine the authenticity of the tag corresponding to the similar event.

Step 103, matching and calculating the similar event or the event to be processed with the preset event template to obtain a second matching degree.

In this embodiment, the event to be processed or the similar event is matched with the preset event template, and the second matching degree is calculated. According to the second matching degree, it is determined whether there is a target event template matching the similar event in the database, and then the user intention of the similar event is determined according to the matched target event template, and then the intention corresponding to the question and answer request currently raised by the user is inferred through the similar event. In some embodiments, the second matching degree can be calculated by calculating the similarity value between the similar event and the preset event template. It should be understood that the algorithm for the similarity value belongs to the mature technology in this field, and does not belong to the improved invention point of this scheme, so it will not be described in detail.

Step 104, calculating the first matching degree and the second matching degree according to a preset rule to obtain a first result and a second result respectively, and taking the preset event template corresponding to a larger one of the first result and the second result as a target event template to semantically understand the event to be processed.

In one embodiment provided in the present application, the preset event template corresponding to the larger one of the first matching degree and the second matching degree is taken as the target event template. In another embodiment provided in the present application, considering that the second matching degree is obtained through prediction and its authenticity cannot be ensured, there is a situation where it cannot completely replace the user's true intention. The accuracy of the preset event template obtained by matching the similar event from the database may not be greater than the preset event template obtained by matching the event to be processed. In order to reduce the error caused by the prediction, this solution processes the first matching degree and the second matching degree by setting the preset rule to obtain the first result and the second result. The preset event template corresponding to the larger one of the first result and the second result is taken as the target event template. The above preset rule can be set according to the actual business situation and is not limited here.

Furthermore, according to the different weight values pre-assigned to the similar event and the event to be processed, the first matching degree and the second matching degree are weighted and calculated correspondingly, and the above first result and second result can be obtained. For example, a weight value of the similar event is 0.8, and a weight value of the event to be processed is 0.2. The allocation of the above weight values can be set according to the actual business situation and is not limited here.

By assigning different weight values to the similar event and the event to be processed, sizes of the first matching degree and the second matching degree can be comprehensively evaluated. This prevents a recognition result from being unreliable because the second matching degree corresponding to the similar event is significantly greater than the first matching degree corresponding to the event to be processed under normal circumstances. That is, by setting the weight values, the error caused by predicting the similar event can be reduced.

Furthermore, after obtaining the above target event template, the semantic understanding of the event to be processed output by the user can be performed. Each word dictionary in the target event template has its corresponding word tag. Assume that the matched target word template happens to contain the word dictionary of the three keywords "today", "Shenzhen", and "weather", at this time, the word tags corresponding to the matched word dictionary are "time", "location", and "intention", indicating that the user intention corresponding to the event to be processed is to ask about the weather conditions in Shenzhen today.

In summary, the embodiments of the present application can quickly generate a large number of similar statements for speech generalization when the current corpus does not meet the requirements for recognizing user intentions, thereby improving the ability of the dialogue system to recognize user intentions and adapting to the expression habits of different users. It is not necessary for users to issue requests according to a specific template in order to accurately recognize user intentions, thus avoiding the problem of poor interactive experience due to misunderstanding or not understanding user intentions.

### Embodiment 2:

The semantic understanding method provided in the embodiment of the present application further includes the following steps:
After taking the preset event template corresponding to the larger one of the first result and the second result as the target event template to semantically understand the event to be processed, the similar event corresponding to the larger one of the first result and the second result is stored in a sample database of the semantic enhancement model as a newly added training sample.

Based on this embodiment, after the semantic enhancement model is trained, it is continuously trained, iterated, and updated by taking weekly or monthly units and taking data as a closed loop. For example, the semantic enhancement model is updated once a week or a month, and the performance is continuously iterated while ensuring the stability of online services.

### Embodiment 3:

The semantic understanding method provided in the embodiment of the present application further includes the following steps:
After taking the preset event template corresponding to the larger one of the first result and the second result as the target event template to semantically understand the event to be processed, based on a Lexparser syntax analysis tool, the similar event obtained by the statement expansion operation is converted into a newly added preset event template, and the newly added preset event template is stored in a database for storing the preset event template, so as to update the database and improve the matching accuracy.

It should be noted that the update frequency of the database used to store preset event template can be monthly, weekly, or other customized methods, so as to ensure the stability of online services while continuously iterating to improve the performance.

It should be explained that the Lexparser syntax analysis tool is an event structure analysis based on rule deduction. A type of query expressed by users (i.e., the event to be processed mentioned in the text) usually conforms to a certain pattern. Queries with the same pattern are summarized into a template form. Using templates to describe user needs has strong controllability and high accuracy, and is a relatively common rule-based query analysis method. The purpose of the Lexparser syntax analysis tool is to convert the similar event obtained by the statement expansion operation into the newly added preset event template, which will not be elaborated here.

### Embodiment 4:

The semantic understanding method provided in the embodiment of the present application further includes the following steps:
At least two keywords contained in the event to be processed are filled into the corresponding word slots of the target event template to obtain a target template file. It should be understood that a keyword extraction method belongs to conventional technical means in this field, such as extracting from the event to be processed that has been converted into a text format in advance through a TF-IDF (term frequency-inverse document frequency) algorithm.

The target template file is input into an answer engine to perform an event retrieval operation, and a target answer corresponding to the event to be processed is output.

In this embodiment, the answer engine can quickly locate the corresponding database according to the word tag corresponding to each keyword in the target template file, and obtain the corresponding target answer from the database according to each keyword, thereby improving the user's request response speed. It should be noted that the answer engine can be implemented based on a third-party answer engine, which will not be described in detail here.

In another embodiment, the target answer may be fed back to the user in a preset display form, for example, the target answer may be fed back to the user in the form of voice, so as to expand the scope of application of the solution and increase optional solutions for the user.

### Embodiment 5:

The semantic understanding method provided in the embodiment of the present application further includes the following steps:
After obtaining the at least two keywords contained in the event to be processed, a first arrangement order of the at least two keywords in the event to be processed is recorded.

Since different positions of the same word in a sentence may result in different meanings of the entire sentence, based on this embodiment, by distinguishing the first arrangement order of the keywords in the event to be processed, the user intention of the user can be further improved.

Specifically, a first text feature vector of the event to be processed and a second text feature vector of the preset event template are acquired; a text feature similarity value between the event to be processed and the preset event template is calculated according to the first text feature vector and the second text feature vector; a first temporal feature vector of the event to be processed is acquired according to the first arrangement order, and a second temporal feature vector of the preset event template is acquired according to the second arrangement order; a temporal feature similarity value between the event to be processed and the preset event template is calculated according to the first temporal feature vector and the second temporal feature vector; the text feature similarity value and the temporal feature similarity value are added to obtain a first matching degree.

All the above optional technical solutions can be combined in any way to form optional embodiments of the present application, and will not be described one by one here.

**In** specific implementation, the present application is not limited by the execution order of the various steps described. If there is no conflict, some steps can also be performed in other orders or simultaneously.

As can be seen from the above, in the semantic understanding method provided in the embodiments of the present application, the acquired event to be processed is preprocessed, and the preprocessed event to be processed is matched and calculated with the preset event template to obtain the first matching degree; the event to be processed is input into the pre-trained semantic enhancement model for statement expansion to obtain the similar event of the event to be processed; the event to be processed is input into the pre-trained semantic enhancement model for statement expansion to obtain the similar event of the event to be processed; the first matching degree and the second matching degree are calculated according to the preset rule to obtain the first result and the second result respectively, and the preset event template corresponding to the larger one of the first result and the second result is taken as the target event template to perform semantic understanding on the event to be processed. The embodiments of the present application can quickly generate a large number of similar statements for speech generalization when the current corpus does not meet the requirements for recognizing user intentions, thereby improving the ability of the dialogue system to recognize user intentions. Furthermore, it can adapt to the expression habits of different users, and can accurately recognize user intentions without requiring users to issue requests according to specific templates. This prevents the problem of poor interactive experience due to misunderstanding or not understanding user intentions.

An embodiment of the present application further provides a semantic understanding apparatus, which can be integrated into a terminal device, which can be a smart phone, a tablet computer, or other device.

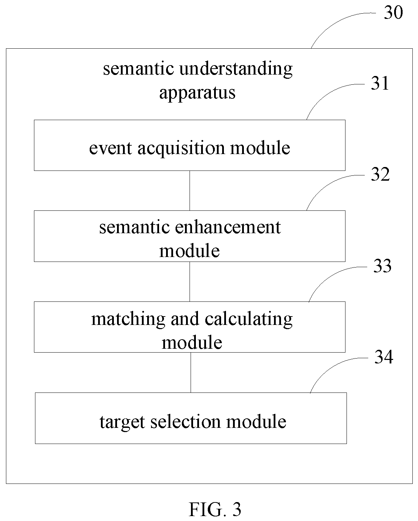

Please refer to FIG. 3, which is a schematic diagram of a structure of a semantic understanding apparatus provided by an embodiment of the present application. The semantic understanding apparatus 30 may include:
an event acquisition module 31 configured to preprocess an acquired event to be processed, and match and calculate the preprocessed event to be processed with a preset event template to obtain a first matching degree;
a semantic enhancement module 32 configured to input the event to be processed into a pre-trained semantic enhancement model for statement expansion to obtain a similar event of the event to be processed;
a matching and calculating module 33 configured to match and calculate the similar event or the event to be processed with the preset event template to obtain a second matching degree;
a target selection module 34 configured to calculate the first matching degree and the second matching degree according to a preset rule to obtain a first result and a second result respectively, and take the preset event template corresponding to a larger one of the first result and the second result as a target event template to semantically understand the event to be processed.

In some embodiments, the target selection module 34 is configured to perform weighted calculations on the first matching degree and the second matching degree to obtain the first result and the second result according to different weight values pre-assigned to the similar event and the event to be processed.

In some embodiments, the apparatus further includes a new adding module configured to store the similar event corresponding to the larger one of the first result and the second result in a sample database of the semantic enhancement model as a newly added training sample.

In some embodiments, the apparatus further includes an updating module configured to convert the similar event obtained by an operation of the statement expansion into a newly added preset event template based on a Lexparser syntax analysis tool, and store the newly added preset event template in a database for storing the preset event template, so as to update the database.

In some embodiments, the semantic enhancement model includes a statement generator and a statement discriminator. The statement generator is configured to generate the similar event based on a training sample, and the statement discriminator is configured to determine an authenticity of a tag corresponding to the similar event.

In some embodiments, the preset event template includes at least two word dictionaries and word slots corresponding to the corresponding word dictionaries, and each of the word dictionaries has a corresponding word tag in the preset event template, and the word tag is configured to indicate a word attribute of the word dictionary.

In some embodiments, the apparatus further includes an answer module configured to fill at least two keywords contained in the event to be processed into the corresponding word slots of the target event template to obtain a target template file;
input the target template file into an answer engine to perform an event retrieval operation, and output a target answer corresponding to the event to be processed.

In some embodiments, the apparatus further includes a recording module configured to record a first arrangement order of the at least two keywords in the event to be processed.

In some embodiments, the apparatus further includes a feedback module configured to feed back the target answer to a user in a preset display form.

In specific implementation, the above modules can be implemented as independent entities, or can be arbitrarily combined to be implemented as the same entity or several entities.

As can be seen from the above, in the semantic understanding apparatus 30 provided in the embodiment of the present application, the event acquisition module 31 preprocesses the acquired event to be processed, and matches and calculates the preprocessed event to be processed with the preset event template to obtain the first matching degree; the semantic enhancement module 32 inputs the event to be processed into the pre-trained semantic enhancement model for statement expansion to obtain the similar event of the event to be processed; the matching and calculating module 33 matches and calculates the similar event or the event to be processed with the preset event template to obtain the second matching degree; the target selection module 34 calculates the first matching degree and the second matching degree according to the preset rule to obtain the first result and the second result respectively, and takes the preset event template corresponding to the larger one of the first result and the second result as the target event template to semantically understand the event to be processed.

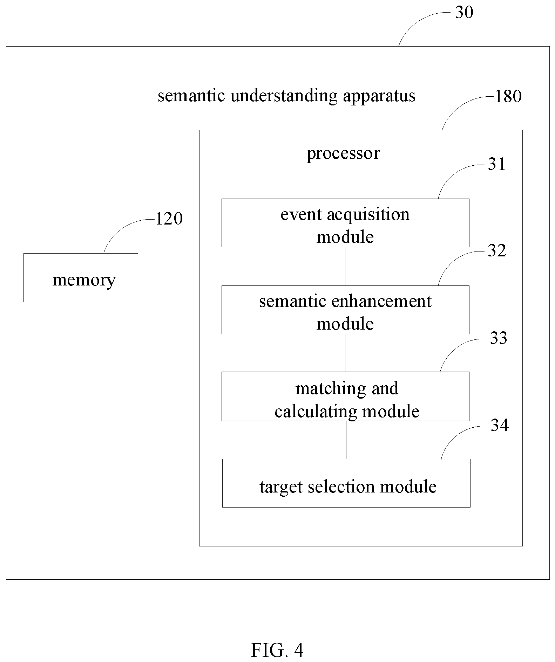

Please refer to FIG. 4, which is another schematic diagram of a structure of a semantic understanding apparatus provided in an embodiment of the present application. The semantic understanding apparatus 30 includes a memory 120, one or more processors 180, and one or more applications. The one or more applications are stored in the memory 120 and configured to be executed by the processor 180. The processor 180 may include an event acquisition module 31, a semantic enhancement module 32, a matching and calculating module 33, and a target selection module 34. For example, the structures and connection relationships of the above components may be as follows:
The memory 120 can be configured to store applications and data. The applications stored in the memory 120 include executable codes. The applications can be composed of various functional modules. The processor 180 executes various functional applications and data processing by running the applications stored in the memory 120. In addition, the memory 120 can include a high-speed random access memory and a non-volatile memory, such as at least one disk memory device, flash memory device, or other volatile solid-state memory device. Accordingly, the memory 120 can also include a memory controller to provide the processor 180 with access to the memory 120.

The processor 180 is a control center of the apparatus. The processor 180 uses various interfaces and lines to connect the various parts of the entire terminal, and performs various functions of the terminal and processes data by running or executing software programs and/or modules stored in the memory 120 and invoking data stored in the memory 120, to monitor the apparatus as a whole. Alternatively, the processor 180 may include one or more processing units. Preferably, the processor 180 may integrate an application processor and a modem processor. The application processor mainly deals with an operating system, a user interface, an application program, and the like.

Specifically in this embodiment, the processor 180 will load the executable code corresponding to one or more application processes into the memory 120 according to the following instructions, and the processor 180 will run the application stored in the memory 120 to achieve various functions:
the event acquisition module 31 configured to preprocess an acquired event to be processed, and match and calculate the preprocessed event to be processed with a preset event template to obtain a first matching degree;
the semantic enhancement module 32 configured to input the event to be processed into a pre-trained semantic enhancement model for statement expansion to obtain a similar event of the event to be processed;
the matching and calculating module 33 configured to match and calculate the similar event or the event to be processed with the preset event template to obtain a second matching degree;
the target selection module 34 configured to calculate the first matching degree and the second matching degree according to a preset rule to obtain a first result and a second result respectively, and take the preset event template corresponding to a larger one of the first result and the second result as a target event template to semantically understand the event to be processed.

In some embodiments, the target selection module 34 is configured to perform weighted calculations on the first matching degree and the second matching degree to obtain the first result and the second result according to different weight values pre-assigned to the similar event and the event to be processed.

In some embodiments, the apparatus further includes a new adding module configured to store the similar event corresponding to the larger one of the first result and the second result in a sample database of the semantic enhancement model as a newly added training sample.

In some embodiments, the apparatus further includes an updating module configured to convert the similar event obtained by an operation of the statement expansion into a newly added preset event template based on a Lexparser syntax analysis tool, and store the newly added preset event template in a database for storing the preset event template, so as to update the database.

In some embodiments, the semantic enhancement model includes a statement generator and a statement discriminator. The statement generator is configured to generate the similar event based on a training sample, and the statement discriminator is configured to determine an authenticity of a tag corresponding to the similar event.

In some embodiments, the preset event template includes at least two word dictionaries and word slots corresponding to the corresponding word dictionaries, and each of the word dictionaries has a corresponding word tag in the preset event template, and the word tag is configured to indicate a word attribute of the word dictionary.

In some embodiments, the apparatus further includes an answer module configured to fill at least two keywords contained in the event to be processed into the corresponding word slots of the target event template to obtain a target template file;
input the target template file into an answer engine to perform an event retrieval operation, and output a target answer corresponding to the event to be processed.

In some embodiments, the apparatus further includes a recording module configured to record a first arrangement order of the at least two keywords in the event to be processed.

In some embodiments, the apparatus further includes a feedback module configured to feed back the target answer to a user in a preset display form.

An embodiment of the present application further provides a terminal device, which may be a smart phone, a computer, a tablet computer, or other device.

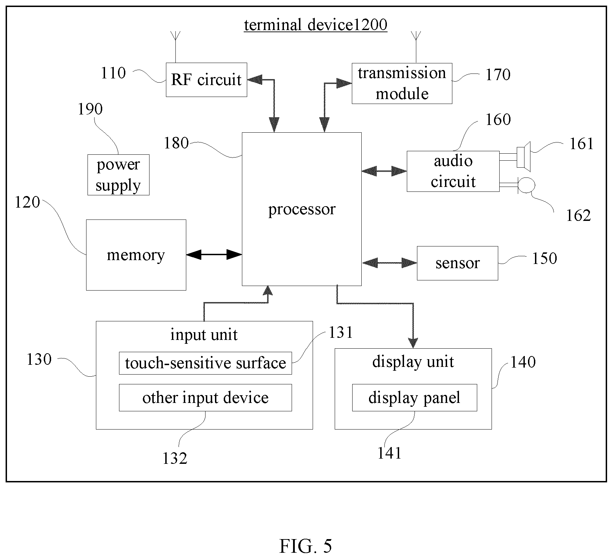

Please refer to FIG. 5, which shows a schematic diagram of a structure of a terminal device provided in an embodiment of the present application, and the terminal device can be configured to implement the semantic understanding method provided in the above embodiments. The terminal device 1200 can be a smart phone or a tablet computer.

As shown in FIG. 5, a terminal device 1200 may include an RF (radio frequency) circuit 110, a memory 120 including one or more computer-readable storage mediums (only one is shown in the figure), an input unit 130, a display unit 140, a sensor 150, an audio circuit 160, a transmission module 170, a processor 180 including one or more processing cores (only one is shown in the figure), and a power supply 190. Those skilled in the art will appreciate that the structure of the terminal device 1200 shown in FIG. 5 does not limit the terminal device 1200, and may include more or fewer components than shown in the figure, or combine certain components, or arrange the components differently.

The RF circuit 110 is configured to receive and transmit electromagnetic waves and to realize conversions of the electromagnetic waves and electrical signals, thereby communicating with a communication network or any other device. The RF circuit 110 can include various conventional circuit elements used for performing these functions, for example, an antenna, a radio frequency transmitter, a digital signal processor, an encryption/decryption chip, a subscriber identification module (SIM) card, a memory and the like. The RF circuit 110 can communicate with various networks, for example, an internet, an intranet or a wireless network, or can communicate with any other device via a wireless network.

The memory 120 can be configured to store software programs and modules, for example, the program instructions/modules corresponding to the semantic understanding method in the above embodiments. The processor 180 executes various functional applications and data processing by operating the software programs and the modules stored in the memory 120. It can automatically select a vibration reminder mode for semantic understanding according to a current scene of the terminal device, which can ensure that scenes such as meetings are not disturbed and that users can sense incoming calls, thereby improving the intelligence of the terminal device. The memory 120 can include a high speed random access memory and also can include a non-volatile memory, such as one or more disk storage devices, a flash memory device or other non-volatile solid storage devices. In some embodiments, the memory 120 can further include a remote memory disposed corresponding to the processor 180. The remote memory can be connected to the terminal device 1200 via a network. Examples of the network include but are not limited to an internet, an intranet, a local area network, a mobile communication network and the combinations of them.

The input unit 130 can be configured to receive input number or character information and to generate keyboard, mouse, joystick, optical or trajectory ball signal inputs related to a user's setting and functional control. In detail, the input unit 130 can include a touch-sensitive surface 131 and other input devices 132. The touch-sensitive surface 131, also called a touch display screen or a touch panel, can be configured to detect touch operations of a user on or near the touch-sensitive surface 131 (for example, operations carried out by the user through any suitable objects or attachments, such as a finger, a touch pen and the like, on the touch-sensitive surface 131 or near the touch-sensitive surface 131) and to drive a corresponding device connected therewith according to a preset program. Optionally, the touch-sensitive surface 131 can include a touch detection device and a touch controller. The touch detection device detects the touch direction of the user, detects a signal caused by the touch operation, and transmits the signal to the touch controller. The touch controller receives touch information from the touch detection device, converts the touch information into a contact coordinate, and then transmits the contact coordinate to the processor 180 and can receive a command transmitted by the processor 180 and execute the command. Moreover, the touch-sensitive surface 131 can be one of various types, such as a resistance type, a capacitance type, an infrared type, a surface acoustic wave type and the like. Besides the touch-sensitive surface 131, the input unit 130 also can include the other input devices 132. In detail, other input devices 132 can include, but is not limited to, one or more of a physical keyboard, function keys (such as a volume control key, a switching key and the like), a trackball, a mouse, a joystick and the like.

The display unit 140 can be configured to display information input by the user or information provided for the user and various graphical user interfaces of the terminal device 1200. The graphical user interfaces can be constituted by graphics, texts, icons, videos and any combinations of them. The display unit 140 can include a display panel 141. Optionally, the display panel 141 can be configured in forms of a Liquid Crystal Display (LCD), an Organic Light-Emitting Diode (OLED) and the like. Furthermore, the touch-sensitive surface 131 can cover the display panel 141. When the touch-sensitive surface 131 detects a touch operation on or near it, the signal caused by the touch operation is transmitted to the processor 180 to determine the type of a touch event. Then, the processor 180 provides a corresponding visual output on the display panel 141 according to the type of the touch event. Although the touch-sensitive surface 131 and the display panel 141 in FIG. 5 are served as two independent parts for accomplishing input and output functions, it can be understood that the touch-sensitive surface 131 and the display panel 141 can be integrated to accomplish the input and output functions.

The terminal device 1200 can further include at least one sensor 150, such as an optical sensor, a motion sensor and other sensors. In detail, the optical sensor can include an environmental light sensor and a proximity sensor. The environmental light sensor can adjust brightness of the display panel 141 according to the lightness of environmental light. The proximity sensor may turn off the display panel 141 and/or the backlight when the terminal device 1200 is moved to the ear. As one type of the motion sensor, an accelerometer sensor can detect the value of an acceleration in each direction (generally in three axial directions), can detect the value and the direction of gravity in a static state, which can be used for applications that recognize the posture of a phone (such as switching between a horizontal screen and a vertical screen, switching related to a game, and calibration on the posture of a magnetometer), vibration identifying functions (such as for pedometer and striking) and the like. Furthermore, a gyroscope, a barometer, a humidity meter, a thermometer, an infrared sensor and other sensors can be integrated into the terminal device 1200, and explanations are not repeated herein.

The audio circuit 160, a speaker 161 and a microphone 162 can provide an audio interface between the user and the terminal device 1200. The audio circuit 160 can transmit an electric signal obtained by converting received audio data to the speaker 161. The electric signal is converted into a sound signal to be outputted by the speaker 161. On the other hand, the microphone 162 converts a collected sound signal into an electric signal. The audio circuit 160 receives the electric signal and converts the electric signal into audio data. After the audio data is outputted to the processor 180 and is processed, it is transmitted, for example, to another terminal through the RF circuit 110, or is outputted to the memory 120 in order to be further processed. The audio circuit 160 can further include an ear plug hole for providing communication between an external ear phone and the terminal device 1200.

The terminal device 1200 can help the user to send and receive emails, browse web pages, and access streaming media through the transmission module 170 (for example, a Wi-Fi module). The transmission module 170 provides wireless broadband internet access for the user. Although the transmission module 170 is shown in FIG. 5, it should be understood that the transmission module 170 is not the necessary part of the terminal device 1200 and can completely be omitted as required without changing the scope of essence of the present disclosure.

The processor 180 is a control center of the terminal device 1200, is connected with all the parts of the whole phone by various interfaces and lines, and is configured to execute various functions of the terminal device 1200 and process the data by operating or executing software programs and/or modules stored in the memory 120 and calling data stored in the memory 120, so as to carry out integral monitoring on the phone. Optionally, the processor 180 can include one or more processing cores. In some embodiments, the processor 180 can be integrated with an application processor and a modulation/demodulation processor. The application processor is mainly configured to process an operating system, a user interface, an application program and the like. The modulation/demodulation processor is mainly configured to process wireless communication. It can be understood that the modulation/demodulation processor can also be not integrated into the processor 180.

The terminal device 1200 further includes a power supply 190 (such as a battery) for supplying power to each part. In some embodiments, the power supply can be logically connected with the processor 180 by a power supply management system, so as to implement functions of charge management, discharge management, power consumption management and the like by the power supply management system. The power supply 190 can further include one or more direct current or alternating current power supplies, recharging systems, power supply failure detection circuits, power converters or inverters, power supply status indicators and the like.

Although not shown, the terminal device 1200 can further include a camera (for example, a front camera or a rear camera), a BLUETOOTH module, and the like which are not further described herein. In the present embodiment, the display unit 140 of the terminal device 1200 is a touch screen display, and the terminal device 1200 further includes a memory 120 and one or more programs. The one or more programs are stored in the memory 120 and configured to be executed by one or more processors 180 to perform instructions for executing the following operations contained in the one or more programs:
an event acquisition instruction configured to preprocess an acquired event to be processed, and match and calculate the preprocessed event to be processed with a preset event template to obtain a first matching degree;
a semantic enhancement instruction configured to input the event to be processed into a pre-trained semantic enhancement model for statement expansion to obtain a similar event of the event to be processed;
a matching and calculating instruction configured to match and calculate the similar event or the event to be processed with the preset event template to obtain a second matching degree;
a target selection instruction configured to calculate the first matching degree and the second matching degree according to a preset rule to obtain a first result and a second result respectively, and take the preset event template corresponding to a larger one of the first result and the second result as a target event template to semantically understand the event to be processed.

In some embodiments, the target selection instruction is configured to perform weighted calculations on the first matching degree and the second matching degree to obtain the first result and the second result according to different weight values pre-assigned to the similar event and the event to be processed.

In some embodiments, the program further includes a new adding instruction configured to store the similar event corresponding to the larger one of the first result and the second result in a sample database of the semantic enhancement model as a newly added training sample.

In some embodiments, the program further includes an updating instruction configured to convert the similar event obtained by an operation of the statement expansion into a newly added preset event template based on a Lexparser syntax analysis tool, and store the newly added preset event template in a database for storing the preset event template, so as to update the database.

In some embodiments, the semantic enhancement model includes a statement generator and a statement discriminator. The statement generator is configured to generate the similar event based on a training sample, and the statement discriminator is configured to determine an authenticity of a tag corresponding to the similar event.

In some embodiments, the preset event template includes at least two word dictionaries and word slots corresponding to the corresponding word dictionaries, and each of the word dictionaries has a corresponding word tag in the preset event template, and the word tag is configured to indicate a word attribute of the word dictionary.

In some embodiments, the program further includes an answer instruction configured to fill at least two keywords contained in the event to be processed into the corresponding word slots of the target event template to obtain a target template file;
input the target template file into an answer engine to perform an event retrieval operation, and output a target answer corresponding to the event to be processed.

In some embodiments, the program further includes a recording instruction configured to record a first arrangement order of the at least two keywords in the event to be processed.

In some embodiments, the program further includes a feedback instruction configured to feed back the target answer to a user in a preset display form.

An embodiment of the present application also provides a terminal device. The terminal device may be a device such as a smart phone, a computer, etc.

As can be seen from the above, the embodiment of the present application provides a terminal device 1200, and the terminal device 1200 performs the following steps:

An embodiment of the present application further provides a storage medium, where a computer program is stored in the storage medium. When the computer program is run on a computer, the computer executes the semantic understanding method described in any one of the above embodiments.

It should be noted that, for the semantic understanding method described in the present application, ordinary testers in the field can understand that the implementation of all or part of the process of the semantic understanding method described in the embodiment of the present application can be completed by controlling the relevant hardware through a computer program, and the computer program can be stored in a computer-readable storage medium, such as stored in the memory of a terminal device, and executed by at least one processor in the terminal device, and the execution process may include the process of the embodiment of the semantic understanding method. The storage medium can be a disk, an optical disk, a read-only memory (ROM), a random access memory (RAM), etc.

For the semantic understanding apparatus of the embodiments of the present application, each functional module can be integrated into a processing chip, or each module can exist physically separately, or two or more modules can be integrated into one module. The above-mentioned integrated module can be implemented in the form of hardware or in the form of software functional modules. If the integrated module is implemented in the form of a software functional module and sold or used as an independent product, it can also be stored in a computer-readable storage medium, such as a read-only memory, a disk or an optical disk.

The semantic understanding method, the apparatus, the medium, and the device provided in the embodiments of the present application are described in detail above. Specific examples are used in this specification to illustrate the principles and implementation methods of the present application. The description of the above embodiments is only configured to help understand the method and core idea of the present application; at the same time, for those skilled in the art, according to the idea of the present application, there will be changes in the specific implementation method and application scope. In summary, the content of this specification should not be understood as a limitation on the present application.

## Claims

1. A semantic understanding method, comprising:
preprocessing an acquired event to be processed, and matching and calculating the preprocessed event to be processed with a preset event template to obtain a first matching degree;
inputting the event to be processed into a pre-trained semantic enhancement model for statement expansion to obtain a similar event of the event to be processed;
matching and calculating the similar event or the event to be processed with the preset event template to obtain a second matching degree;
calculating the first matching degree and the second matching degree according to a preset rule to obtain a first result and a second result respectively, and taking the preset event template corresponding to a larger one of the first result and the second result as a target event template to semantically understand the event to be processed.

2. The semantic understanding method of claim 1, wherein the calculating the first matching degree and the second matching degree according to the preset rule to obtain the first result and the second result respectively comprises:
performing weighted calculations on the first matching degree and the second matching degree to obtain the first result and the second result according to different weight values pre-assigned to the similar event and the event to be processed.

3. The semantic understanding method of claim 1, wherein a similar event of the similar event is greater than a weight value of the event to be processed.

4. The semantic understanding method of claim 2, wherein after taking the preset event template corresponding to the larger one of the first result and the second result as the target event template to semantically understand the event to be processed, the method further comprises:
storing the similar event corresponding to the larger one of the first result and the second result in a sample database of the semantic enhancement model as a newly added training sample.

5. The semantic understanding method of claim 1, wherein after taking the preset event template corresponding to the larger one of the first result and the second result as the target event template to semantically understand the event to be processed, the method further comprises:
converting the similar event obtained by an operation of the statement expansion into a newly added preset event template based on a Lexparser syntax analysis tool, and storing the newly added preset event template in a database for storing the preset event template, so as to update the database.

6. The semantic understanding method of claim 5, wherein the semantic enhancement model comprises a statement generator and a statement discriminator.

7. The semantic understanding method of claim 6, wherein the statement generator is configured to generate the similar event based on a training sample, and the statement discriminator is configured to determine an authenticity of a tag corresponding to the similar event.

8. The semantic understanding method of claim 1, wherein the preset event template comprises at least two word dictionaries and word slots corresponding to the corresponding word dictionaries, and each of the word dictionaries has a corresponding word tag in the preset event template, and the word tag is configured to indicate a word attribute of the word dictionary.

9. The semantic understanding method of claim 8, wherein the method further comprises:
filling at least two keywords contained in the event to be processed into the corresponding word slots of the target event template to obtain a target template file;
inputting the target template file into an answer engine to perform an event retrieval operation, and outputting a target answer corresponding to the event to be processed.

10. The semantic understanding method of claim 9, wherein the keyword is extracted from the event to be processed which is pre-converted into a text format by using a TF-IDF algorithm.

11. The semantic understanding method of claim 9, wherein the inputting the target template file into the answer engine to perform the event retrieval operation, and outputting the target answer corresponding to the event to be processed comprises:
inputting the target template file into the answer engine, wherein the answer engine locates a corresponding database according to the word tag corresponding to each keyword in the target template file, and acquires a corresponding target answer from the database according to each keyword.

12. The semantic understanding method of claim 11, wherein after obtaining the at least two keywords contained in the event to be processed, the method further comprises:
recording a first arrangement order of the at least two keywords in the event to be processed.

13. The semantic understanding method of claim 12, wherein the at least two word dictionaries in the preset event template are sorted according to a preset second arrangement order.

14. The semantic understanding method of claim 13, wherein the matching and calculating the preprocessed event to be processed with the preset event template to obtain the first matching degree comprises:
acquiring a first text feature vector of the event to be processed and a second text feature vector of the preset event template;
calculating a text feature similarity value between the event to be processed and the preset event template according to the first text feature vector and the second text feature vector;
acquiring a first temporal feature vector of the event to be processed according to the first arrangement order, and acquiring a second temporal feature vector of the preset event template according to the second arrangement order;
calculating a temporal feature similarity value between the event to be processed and the preset event template according to the first temporal feature vector and the second temporal feature vector;
adding the text feature similarity value and the temporal feature similarity value to obtain the first matching degree.

15. The semantic understanding method of claim 1, wherein after outputting the target answer corresponding to the event to be processed, the method further comprises:
feeding back the target answer to a user in a preset display form.

16. A semantic understanding apparatus, comprising:
an event acquisition module configured to preprocess an acquired event to be processed, and match and calculate the preprocessed event to be processed with a preset event template to obtain a first matching degree;
a semantic enhancement module configured to input the event to be processed into a pre-trained semantic enhancement model for statement expansion to obtain a similar event of the event to be processed;
a matching and calculating module configured to match and calculate the similar event or the event to be processed with the preset event template to obtain a second matching degree;
a target selection module configured to calculate the first matching degree and the second matching degree according to a preset rule to obtain a first result and a second result respectively, and take the preset event template corresponding to a larger one of the first result and the second result as a target event template to semantically understand the event to be processed.

17. The semantic understanding apparatus of claim 16, wherein the target selection module is configured to perform weighted calculations on the first matching degree and the second matching degree to obtain the first result and the second result according to different weight values pre-assigned to the similar event and the event to be processed.

18. The semantic understanding apparatus of claim 17, wherein the apparatus further comprises a new adding module configured to store the similar event corresponding to the larger one of the first result and the second result in a sample database of the semantic enhancement model as a newly added training sample.

19. A computer-readable storage medium storing a plurality of instructions, wherein the instructions are suitable for being loaded by a processor to execute the semantic understanding method according to any one of claims 1 to 15.

20. A terminal device, comprising a processor and a memory, wherein the memory stores a plurality of instructions, and the processor loads the instructions to execute the semantic understanding method according to any one of claims 1 to 15.
